# EUROPEAN PATENT APPLICATION

(11) **EP 4 838 731 A1**
(43) Date of publication of application: **11.11.2026**
(21) Application number: 26176760.2
(22) Date of filing: 06.05.2026
(51) Int. Cl.: H02G 15/04, H02G 3/06, H02G 3/22, H02G 15/00, H02G 15/013

(54) **CABLE GLAND ASSEMBLY**

(30) Priority: 09.05.2025 US 202519203710
(71) Applicant: Eaton Intelligent Power Limited, Dublin D04 Y0C2 (IE)
(72) Inventor: Tarade, Sujit Prabhakar, Dublin 4 (IE); Khokle, Himanshu Gangadhar, Dublin 4 (IE); Pawar, Rajendra Vishwanath, Dublin 4 (IE); Okwandu, Uzoma, Dublin 4 (IE)
(74) Representative: Schwan Schorer & Partner mbB

(57) **Abstract**

A cable gland assembly includes a hub body mounted to a compound chamber. The compound chamber defining an internal passage through which one or more conductors of a cable extend. A liquid sealant is inserted into the passage to seal between the conductors and an interior surface of the passage. The passage defines a sump into which the liquid sealant is initially introduced before filling an axially outer portion of the passage. A filling aperture leads to the sump through an outer wall of the compound chamber. A captive band covers the filling aperture to provide a non-return valve. The band seals between the compound chamber and a hub mounted thereto.

## Description

### CROSS-REFERENCE TO RELATED APPLICATION

This application claims the benefit of and priority to U.S. Patent Application No. 19/203,710 filed on May 9, 2025, the disclosure of which is hereby incorporated by reference in its entirety.

### BACKGROUND

A flame proof cable gland assembly seals the junction between a cable and a device, enclosure, or other structure into which the cable is extending. The cable gland assembly includes a hub body, a compound chamber, a union nut, and a gland nut. The compound chamber is configured to be secured in position over a portion of the cable. In particular, one or more conductors of an armored cable extend out of an armored jacket within the compound chamber. The hub body is configured to mount to a device, an enclosure, or other structure. The union nut joins the hub body and the compound chamber.

### SUMMARY

A cable gland assembly includes a compound chamber, a hub body, and a union nut. The compound chamber defines an internal passage extending between opposite ends of the compound chamber. A sump is disposed at an intermediate location along the internal passage. A filling aperture leads to the sump separate from the ends of the passage. Liquid sealant can be introduced within the compound chamber through the filling aperture.

In a hazardous environment, the air outside the device, enclosure, or other structure may be explosive or flammable. Electrical and/or electronic equipment may be disposed within the device, enclosure, or other structure. In the event of a spark, flame, or other ignition within the device, enclosure, or other structure, the liquid sealant within the gland closes off the internal passage to inhibit a flame from traveling along the same to reach the air outside the device, enclosure, or other structure. Introducing the liquid sealant after the cable is inserted, allows the internal passage to be made large enough to facilitate insertion of the cable within the cable gland.

In certain examples, the liquid sealant is introduced into the cable gland at a location spaced inwardly from an axial end of the cable gland. For example, the liquid sealant may be introduced through the filling aperture. The liquid sealant fills the sump before filling the internal passage adjacent an axial end. Accordingly, the liquid sealant fully seals around the conductors within the sump. Further, the liquid sealant is guaranteed to reach the sump even the conductors fill a larger percentage (e.g., more than 75% of the internal passage, more than 80% of the internal passage, more than 85% of the internal passage, more than 90% of the internal passage).

In accordance with certain aspects of the disclosure, the cable gland assembly is sealed by: positioning a compound chamber of the cable gland over a portion of the cable so that the at least one conductor extends fully along a length of the compound chamber and out of an open end of the compound chamber; orienting the compound chamber so that the portion of the armored cable extends vertically and the open end is facing upwardly; and inserting liquid sealant into a filling aperture defined in the compound chamber, the filling aperture being disposed at an intermediate location along the length of the compound chamber.

In certain implementations, inserting the liquid sealant into the filling aperture includes injecting the liquid sealant through the filling aperture and into a sump defined within the compound chamber. In certain examples, the method includes continuing to insert the liquid sealant through the filling aperture and into the sump as the liquid sealant fills the sump and rises towards the first end of the compound chamber.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### BRIEF DESCRIPTION OF THE DRAWINGS

The accompanying drawings, which are incorporated in and constitute a part of the description, illustrate several aspects of the present disclosure. A brief description of the drawings is as follows:
FIG. 1 is a perspective view of an example cable gland assembly configured in accordance with the principles of the present disclosure and mounted over part of an example cable, the cable gland assembly including a hub body, a compound chamber, a union nut, and a gland nut.
FIG. 2 is an exploded view of the cable gland assembly of FIG. 1.
FIG. 3 is an axial cross-sectional view of the compound chamber of the cable gland assembly of FIG. 1.
FIG. 4 shows a captive band being inserted onto the compound chamber of FIG. 2 over a filling aperture of the compound chamber.
FIG. 5 shows liquid sealant being inserted into a vertically oriented compound chamber of FIG. 3 through the captive band and filling aperture of FIG. 4.
FIG. 6 is an axial cross-sectional view of the compound chamber of FIG. 5 with the captive band disposed over the filling aperture and the sealant cured within the compound chamber.
FIG. 7 is an axial cross-sectional view of the cable gland assembly of FIG. 1 with sealant cured therein between cable conductors and an interior surface of the internal passage.

### DETAILED DESCRIPTION

Reference will now be made in detail to exemplary aspects of the present disclosure that are illustrated in the accompanying drawings. Wherever possible, the same reference numbers will be used throughout the drawings to refer to the same or like parts.

In a hazardous environment, the air outside a device, enclosure, or other structure 150 may be explosive or flammable. Electrical and/or electronic equipment may be disposed within the device, enclosure, or other structure 150. In the event of a spark, flame, or other ignition within the device, enclosure, or other structure 150, it is desired to cut off any ignition path between the interior and exterior of the device, enclosure, or other structure 150. Accordingly, a cable gland 100 is filled at least partially with sealant 140 to seal between an interior of the cable gland 100 and an exterior of the one or more conductors 114 entering the device, enclosure, or other structure 150 through the cable gland 100. The sealant 140 blocks the path of any flames or other explosion from leaving the device, enclosure, or other structure 150 and igniting the outside air. In certain examples, only a portion of the cable gland 100 is filled.

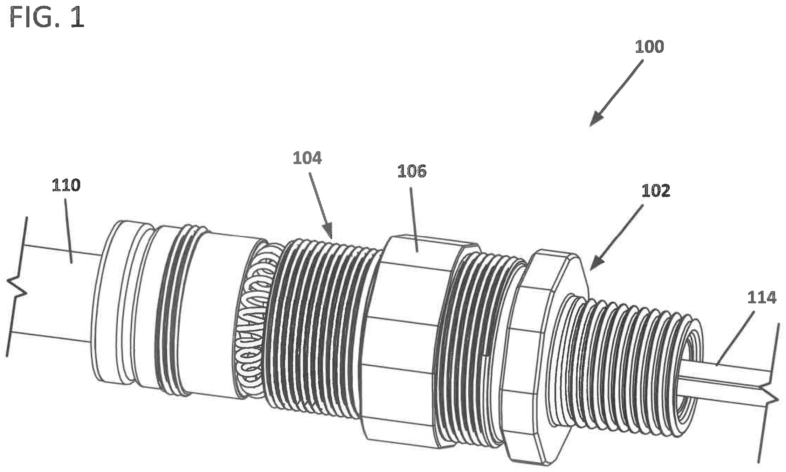

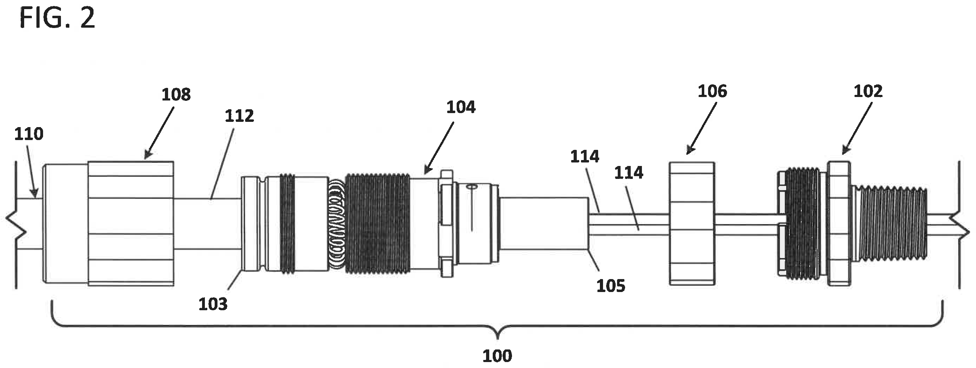

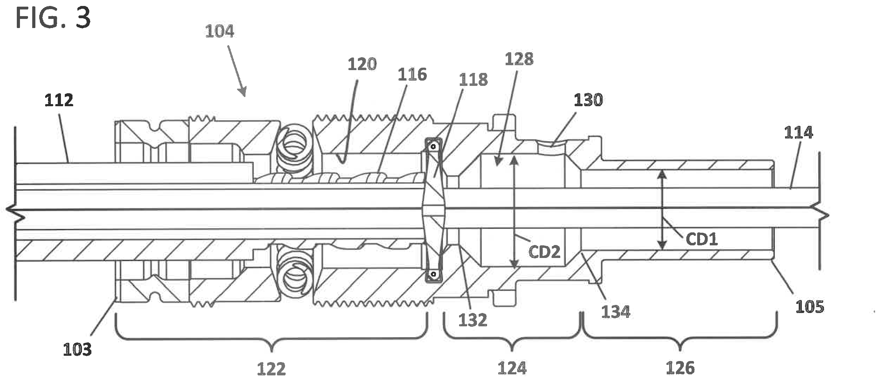

Referring to FIGS. 1-3, a cable gland assembly 100 configured in accordance with the principles of the present disclosure includes a hub body 102, a compound chamber 104, a union nut 106, and a gland nut 108. The cable gland assembly 500 is configured to secure a portion of a cable 110 therein. The cable 110 includes a jacket 112 surrounding one or more conductors 114. In certain examples, the cable 110 includes armor 116 disposed between the jacket 112 and the conductors 114 (e.g., see FIG. 3). In certain examples, the compound chamber 104 is configured to be axially fixed to the portion of the cable 110.

The compound chamber 104 defines an internal passage 120 extending along a length of the compound chamber 104 between a first axial end 103 and an opposite second axial end 105. The internal passage 120 defines at least three sections: a first section 122, a second section 124, and a third section 126. The first section 122 of the passage 120 extends inwardly from the first axial end 103 of the compound chamber 104. The third section 126 of the passage 120 extends inwardly from the second axial end 105 of the compound chamber 104. The second section 124 of the passage 120 is disposed between the first and third sections 122, 126.

The cable 110 extends into the first section 122 of the passage 120 via the first open end 103 of the compound chamber 104. The jacket 112 of the cable 110 terminates within the compound chamber 104 and the conductors 114 extend beyond the jacket 112. The one or more conductors 114 extend out of the compound chamber 104 through the second open end 105. In certain examples, the armor 116 of the cable 110 extends a distance beyond the jacket 112, but also terminates within the compound chamber 104. In certain examples, the jacket 112 terminates within the first section 122 while the conductors 114 extend through the second and third sections 124, 126. In certain examples, the armor 116 also terminates in the first section1 22. In certain implementations, a dam 118 separates the first and second sections 122, 124. In certain examples, the dam 118 allows the conductors 114 to extend therethrough while forming a stop for the armor 116.

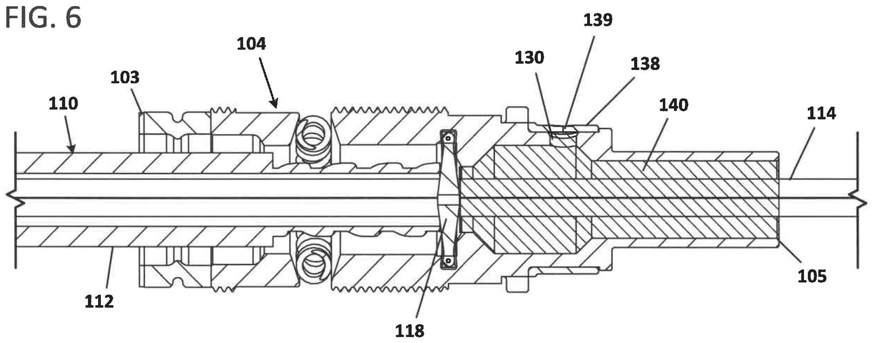

The compound chamber 104 is configured to receive a sealant 140 within the internal passage 120 to seal between the conductors 114 and an interior surface of the internal passage 120 (e.g., see FIG. 6). In certain examples, the sealant 140 axially fixes the portion of the cable 110 within the compound chamber 104. In certain implementations, the sealant 140 extends from the dam 118 to the second end 105 of the compound chamber 104. In certain examples, the sealant 140 extends through the second section 124 and the third section 126 of the internal passage 120. The sealant 140 extends radially between exteriors of the conductors 114 and the interior surface of the internal passage 120.

In accordance with certain aspects of the disclosure, the sealant 140 is inserted into the internal passage 120 as a liquid and then cured to a solid state. In certain implementations, the compound chamber 104 defines a filling aperture 130 through which the liquid sealant 140 enters the internal passage 120. The filling aperture 130 is separate from the first and second open ends 103, 105 of the compound chamber 104. In certain examples, the filling aperture 130 is disposed at an intermediate position between the first and second open ends 103, 105 of the compound chamber 104. In certain examples, the filling aperture 130 leads to the second section 124 of the internal passage 120. Accordingly, the liquid sealant 140 begins filling the internal passage 120 at a location spaced from the second open end 105. In certain examples, the liquid sealant 140 initially fills the second section 124 of the internal passage 120 before filling the third section 126. In certain examples, the dam 118 inhibits the liquid sealant 140 from passing into the first section1 122 of the internal passage 120.

In certain implementations, the second section 124 of the internal passage 120 defines a sump 128 for the liquid sealant 140. In certain examples, the filling aperture 130 leads to the sump 128. The liquid sealant 140 fills the sump 128 before flowing into the third section 126 of the internal passage 120 towards the second open end 105. The sump 128 provides an expanded volume for the sealant 140 compared to the third section 126 of the passage 120. For example, a cross-dimension CD2 of the second section 124 of the internal passage 120 at the sump 128 is larger than a cross-dimension CD1 of the third section 126. In an example, the cross-dimension CD1 of the third section 126 is constant along the third section 126. In certain examples, the cross-dimension CD2 of the second section 124 tapers radially inwardly as the second section 124 extends from the sump 128 towards the dam 118.

The larger cross-dimension CD2 of the sump 128 enhances the sealing around the conductors 114 within the internal passage 120. For example, the larger cross-dimension CD2 allows the liquid sealant 140 to fully surround the conductors 114 even if the conductors 114 are pressed against an interior surface of the internal passage 120 at the third section 126. Accordingly, the reliability of the sealant 140 is enhanced.

In certain implementations, the filling aperture 130 leads directly to the sump 128. In certain examples, the sump 128 extends along the length of the second section 124 between a first end 132 and a second end 134. The first end 132 is disposed at the first section 122 (e.g., at the dam 118) and the second end 134 is disposed at the third section 126. In certain examples, the filling aperture 130 is disposed closer to the second end 134 of the sump 128 than to the first end 132 (e.g., see FIG. 3).

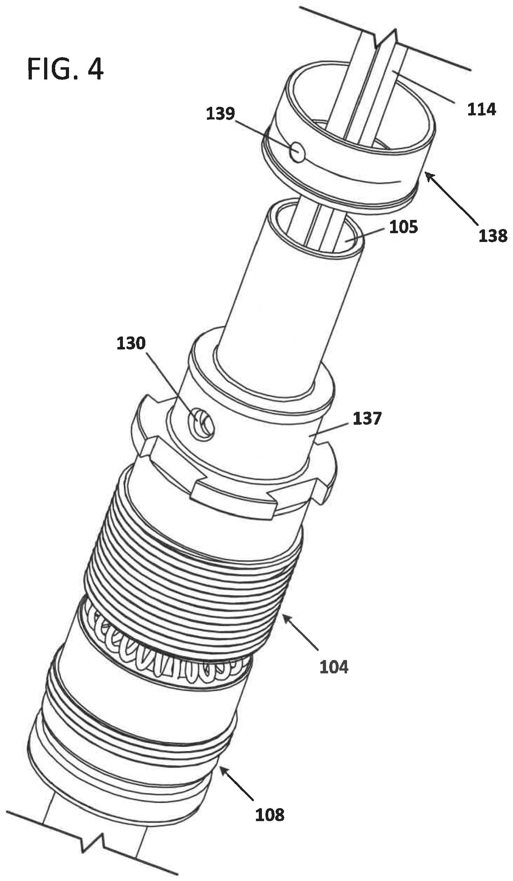

As shown in FIG. 4, a captive band 138 is positioned over the filling aperture 130 before the sealant 140 is inserted. The band 138 is formed of a more resilient material than the compound chamber 104. Some example bands 138 can be formed of an elastomeric material (e.g., rubber), a polymeric material, or a fabric. Other materials are possible. In certain implementations, the compound chamber 104 defines a band mounting region 137 disposed at the filling aperture 130. In some examples, the band mounting region 137 defines a necked-in region of the compound chamber 104. In other examples, the band mounting region 137 includes stop rings at opposite axial ends of the region 137. The captive band 138 defines a weakened region 139 (a slit, a perforated line, an area of thinner material, etc.) that is positioned in alignment with the filling aperture 130 of the compound chamber 104.

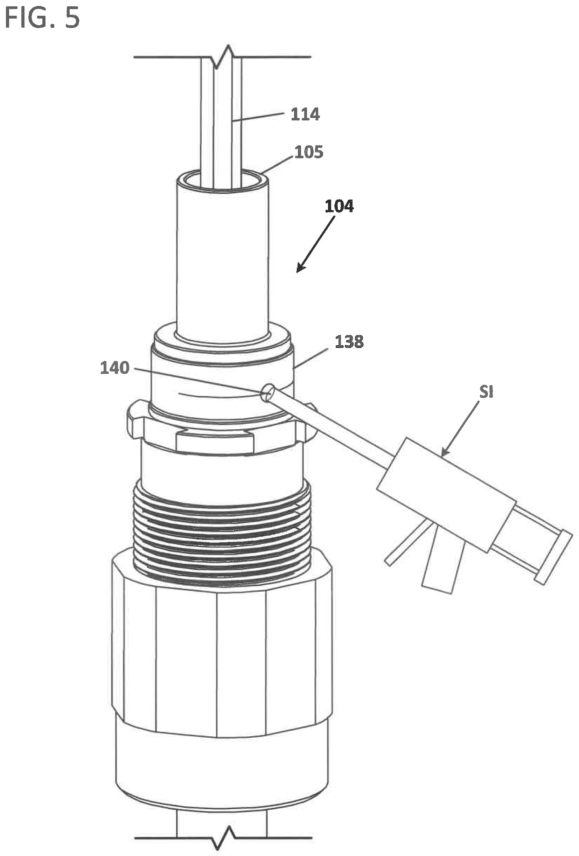

As shown in FIG. 5, when filling the sealant 140, the compound chamber 104 is positioned over the cable 110 so that the jacket 112 extends into the first end 103 and the one or more conductors 114 extends out of the second end 105. The compound chamber 104 and the portion of the cable 110 are oriented to extend in a vertical direction so that the second open end 105 of the compound chamber 104 faces upward. However, the sealant 140 is not inserted into the passage 120 from the second open end 105. Rather, a tip of a sealant insertion tool SI is inserted at the filling aperture 130.

In certain implementations, the tip of the sealant insertion tool SI extends through the band 138 to the filling aperture 130 to inject the sealant 140. In such implementations, the band 138 functions as a non-return valve for the sealant 140. In certain examples, the tip of the sealant insertion tool SI pushes open, tears, breaks, or otherwise passes through the weakened region 139 of the band 138 to reach the filling aperture 130. Liquid sealant 140 is inserted (e.g., injected, poured, etc.) into the sump 128 through the filling aperture 130. The band 138 inhibits backflow of the sealant 140 back through the filling aperture 130.

Because of the orientation of the compound chamber 104, the liquid sealant 140 will first flow downwardly towards the dam 118 and fill the sump 128. In certain examples, the sealant 140 fills the second section 124 of the internal passage 120 before filling the third section 126. When the sump 128 is full (or near full), continued insertion of the liquid sealant 140 causes the collection of sealant 140 within the passage 120 to rise along the third section 126 of the passage 120 towards the second open end 105.

In certain implementations, once the filling process is complete and the sealant insertion tool SI is removed, the weakened region 139 automatically closes due to the stretchable and elastic properties of the band 138. Accordingly, the band 138 inhibits the liquid sealant 140 from flowing out of the sump 128 or otherwise leaving the compound chamber 104. The liquid sealant 140 is cured (e.g., via time, heat, ultra-violet light exposure, etc.) until the sealant 140 has solidified within the internal passage 120 (e.g., see FIG. 5). In other implementations, the captive band 138 could be mounted over the filling aperture 130 after the sealant 140 has been inserted to retain the sealant 140 during curing. In still other implementations, the band 138 could be positioned over the filling aperture 130 after the sealant 140 has been cured.

In certain implementations, the hub body 102 mounts over the compound chamber 104 so that the hub body 102 covers the filling aperture 130. For example, the second open end 105 of the compound chamber 104 may be inserted within an interior of the hub body 102. In certain implementations, the band 138 seals between the hub body 102 and the compound chamber 104. The elastic properties of the band 138 ensure a tight seal, thereby preventing any leakage and maintaining the integrity of the connection between the hub body 102 and the compound chamber 104.

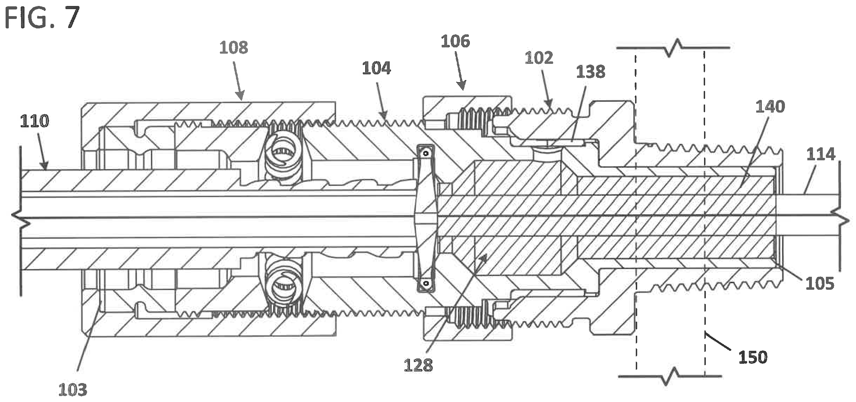

The hub body 102 extends along the length of the compound chamber 104 for the first section 122 and at least part of the second section 124 of the internal passage 120. In certain examples, the second open end 105 of the compound chamber 104 is flush with or recessed within the hub body 102 (e.g., see FIG. 7). In certain implementations, the union nut 106 is disposed about the compound chamber 104 and is configured to thread to the hub body 102. For more information on how the hub body 102 attaches to the compound chamber 104 using the union nut 106, see U.S. Application No. 18/937,922, filed November 05, 2024, and titled "Flame Proof Cable Gland with Inspectable Quick Connector," the disclosure of which is hereby incorporated herein by reference in its entirety.

The hub body 102 is configured to mount to a device, enclosure, or other structure 150. For example, the hub body 102 may be threadedly mounted to the device, enclosure, or other structure 150. The union nut 106 holds the compound chamber 104 to the hub body 102. The gland nut 108 helps to secure the cable 110 within the compound chamber 104 (e.g., by radially compressing a garter spring 136 against the armor 116 of the cable 110). The gland nut 108 mounts (e.g., threadedly mounts) to the compound chamber 104. For more information on the hub body 102, the compound chamber 104 including the garter spring, the union nut 106, and the cable gland 108, see U.S. Application No. 18/937,922 (incorporated by reference above).

Having described the preferred aspects and implementations of the present disclosure, modifications and equivalents of the disclosed concepts may readily occur to one skilled in the art. However, it is intended that such modifications and equivalents be included within the scope of the claims which are appended hereto.

## Claims

1. A cable gland assembly comprising:
an compound chamber extending along an axis between a first open end and a second open end, the compound chamber defining an internal passage extending between the first and second open ends, the passage having a first section, a second section, and a third section, the first section of the passage extending inwardly from the first end of the compound chamber, the third section of the passage extending inwardly from the second end of the compound chamber, and the second section of the passage being disposed between the first and third sections, the second section having a larger cross-dimension than the third section, and the compound chamber defining a filling aperture leading between the second section of the passage and an exterior of the compound chamber;
a hub body configured to mount to the compound chamber, the hub body defining an internal passage into which the second open end of the compound chamber is received when the hub body is mounted to the compound chamber, the hub body radially covering the filling aperture when mounted to the compound chamber; and
a union nut coupling the hub body and the compound chamber together.

2. The cable gland assembly of claim 1, wherein the second section extends between a first end at the first section and a second end at the third section, and wherein the filling aperture is located closer to the second end of the second section than to the first end of the second section.

3. The cable gland assembly of claim 1, further comprising a captive band that mounts to an exterior of the compound chamber to extend over the filling aperture.

4. The cable gland assembly of claim 3, wherein the captive band forms a non-return valve for sealant passing through a weakened area of the captive band.

5. The cable gland assembly of claim 1, further comprising at least one cable extending through the first open end of the compound chamber, the cable including at least one conductor disposed within a jacket, the at least one conductor extending through the compound chamber and out the second open end.

6. The cable gland assembly of claim 5, further comprising a sealant disposed within the internal passage of the compound chamber, the sealant filling the second and third sections of the internal passage around the at least one conductor.

7. The cable gland assembly of claim 6, wherein the sealant is not disposed within the first section of the internal passage.

8. The cable gland assembly of claim 7, further comprising a dam disposed within the internal passage of the compound chamber, the sealant extending along the internal passage between the dam and the second open end of the compound chamber.

9. The cable gland assembly of claim 1, wherein the hub body is configured to mount to an enclosure.

10. The cable gland assembly of claim 1, further comprising a gland nut configured to couple to the first open end of the compound chamber.

11. A method of securing a cable gland to an armored cable, the armored cable including an armored jacket surrounding at least one conductor, the method comprising:
positioning a compound chamber of the cable gland over a portion of the cable so that the at least one conductor extends fully along a length of the compound chamber and out of an open end of the compound chamber;
orienting the compound chamber so that the portion of the armored cable extends vertically and the open end is facing upwardly; and
inserting liquid sealant into a filling aperture defined in the compound chamber, the filling aperture being disposed at an intermediate location along the length of the compound chamber.

12. The method of claim 11, wherein inserting the liquid sealant into the filling aperture comprises injecting the liquid sealant through the filling aperture and into a sump defined within the compound chamber.

13. The method of claim 12, wherein positioning the compound chamber comprises inserting the at least one conductor through a dam disposed within the compound chamber, the sump being disposed between the dam and the open end of the compound chamber.

14. The method of claim 12, further comprising continuing to insert the liquid sealant through the filling aperture and into the sump as the liquid sealant fills the sump and rises towards the first end of the compound chamber.

15. The method of claim 11, wherein inserting the liquid sealant into the filling aperture comprises passing the liquid sealant through a weakened region of a captive band extending over the filling aperture, the captive band inhibiting backflow of the liquid sealant out of the compound chamber.
